(19)

Europäisches
Patentamt
European
Patent Office
Office européen
des brevets

(11) **EP 3 078 275 B1**

(12) **EUROPEAN PATENT SPECIFICATION**

(45) Date of publication and mention
of the grant of the patent:
**25.12.2024 Bulletin 2024/52**

(21) Application number: **15464006.4**

(22) Date of filing: **28.08.2015**

(51) International Patent Classification (IPC):
**A23L 3/00** *(2006.01)*      **B65D 81/28** *(2006.01)*

(52) Cooperative Patent Classification (CPC):
**A23L 3/00;** B65B 25/001

(54) **PROCESS FOR OBTAINING NANOCOMPOSITE FOOD PACKAGES**

VERFAHREN ZUM ERHALTEN VON LEBENSMITTELVERPACKUNGEN MIT NANOKOMPOSITEN

PROCÉDÉS PERMETTANT D'OBTENIR DES EMBALLAGES ALIMENTAIRES NANOCOMPOSITES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.04.2015 RO 201500256**

(43) Date of publication of application:
**12.10.2016 Bulletin 2016/41**

(73) Proprietors:
• **Universitatea Tehnica din Cluj-Napoca,
Centrul Universitar NORD din Baia Mare
430083 Maia Mare, Maramures (RO)**
• **Universitatea Babes-Bolyal
400084 judet Cluj (RO)**
• **ICA Research & Development (ICA R&D) S.R.L.
060021, Bucuresti (RO)**
• **L & G Consulting S.R.L.
405200 Dej, judet Cluj (RO)**
• **Warsaw University of Technology
00-661 Warsaw (PL)**

(72) Inventors:
• **PETER, Anca**
**Maramures (RO)**
• **NICULA, Camelia**
**Maramures (RO)**
• **MIHALY COZMUTA, Anca**
**Maramures (RO)**
• **MIHALY COZMUTA, Leonard**
**Maramures (RO)**
• **DANCIU, Virginia**
**Cluj (RO)**
• **BAIA, Gheorghe-Lucian**
**400446, Cluj-Napoca (RO)**

• **KOVACS, Gábor**
**Arad, cod: 317235 (RO)**
• **CIRIC, Alexandru**
**Judet Ilfov (RO)**
• **BEGEA, Mihaela**
**Bucuresti (RO)**
• **CRACIUN, Liliana**
**jud. Cluj (RO)**
• **CRACIUN, Grigore**
**jud. Cluj (RO)**
• **DUTUC, Gheorghe**
**jud. Cluj (RO)**
• **FALUP, Anca**
**jud. Cluj (RO)**
• **ZIEMKOWSKA, Wanda**
**05-119 Legionowo (PL)**
• **JASTRZEBSKA, Agnieszka**
**05-830 Nadarzyn (PL)**
• **KURTYCZ, Patrycja**
**15-215 Bialystok (PL)**
• **KARWOWSKA, Ewa**
**05-870 Blonie (PL)**
• **MIASKIEWICZ-PESKA, Ewa**
**01-494 Warsaw (PL)**
• **ZALESKA RADZIWILL, Monika**
**02-971 Warsaw (PL)**
• **OLSZYNA, Andrzej**
**01-494 Warsaw (PL)**
• **KUNICKI, Antoni**
**05-800 Pruszków (PL)**
• **SITARZ, Karolina**
**26-415 Klwów (PL)**
• **ROSLON, Magdalena**
**05-240 Jasienica (PL)**

(74) Representative: **Stanciu, Adelina**
**Harcov Cabinet de Propritate Industriala**
**Stanciu Adelina**
**Nicolae Iorga Str. No. 61**
**Bl.10E/B/9**
**520089 Sfantu Gheorghe (RO)**

(56) References cited:
**EP-A1- 1 877 478     EP-B1- 1 877 478**
**CN-A- 102 660 179     CN-A- 103 819 781**
**CN-A- 103 978 756**

- **XI BAOJUAN ET AL: "Preparation of Ag/TiO2/ SiO2films via photo-assisted deposition and adsorptive self-assembly for catalytic bactericidal application", APPLIED SURFACE SCIENCE, vol. 311, 27 April 2014 (2014-04-27), pages 582 - 592, XP028875825, ISSN: 0169-4332, DOI: 10.1016/J.APSUSC.2014.05.112**
- **JUNHUI HE ET AL: "In Situ Synthesis of Noble Metal Nanoparticles in Ultrathin TiO 2 -Gel Films by a Combination of Ion-Exchange and Reduction Processes", LANGMUIR, vol. 18, no. 25, 1 December 2002 (2002-12-01), US, pages 10005 - 10010, XP055575789, ISSN: 0743-7463, DOI: 10.1021/la0260584**
- **AMIN S A ET AL: "Synthesis of TiO"2-Ag nanocomposite with sol-gel method and investigation of its antibacterial activity against E. coli", POWDER TECHNOLOGY - ELECTROSTATIC PHENOMENA IN PARTICULATE PROCESSES, ELSEVIER, BASEL (CH), vol. 196, no. 3, 22 December 2009 (2009-12-22), pages 241 - 245, XP026669856, ISSN: 0032-5910, Retrieved from the Internet <URL:https://doi.org/10.1016/j. powtec.2009.07.021> [retrieved on 20090808], DOI: 10.1016/J.POWTEC.2009.07.021**
- **ANCA MIHALY COZMUTA ET AL: "Active Packaging System Based on Ag/TiO 2 Nanocomposite Used for Extending the Shelf Life of Bread. Chemical and Microbiological Investigations", PACKAGING TECHNOLOGY AND SCIENCE, vol. 28, no. 4, 12 September 2014 (2014-09-12), UK, pages 271 - 284, XP055292278, ISSN: 0894-3214, DOI: 10.1002/pts.2103**

**Description**

The present invention refers to a process for obtaining a pachage on polypropylene, modified with nano-structured composite and to their utilization as food package which guarantee the preservation of food characteristics and prolong its validity time. Evidently, the invention's field of utilization is very large, as it could be used both in household, as well as in industry, in every operation that has to do with food: production, storage, transport, selling.

It is known that food packing is essential and necessary, as food quality would be compromised without it. Almost all food products are packed in a specific way. Food packing provides food protection against contamination and alteration, facilitates transport and offers the possibility of dosing of content uniformly.

The materials used in manufacturing of food packing materials are very divers, including glass, metal, plastic and paper.

Food packages made of paper is used in food industry due to reduced cost and high flexibility. Moreover, paper is considered ecological material and it's easy to recycle. The disadvantage of this solution is that unprocessed paper only offers protection against environmental solids impurities, not providing preservation.

Polypropylene (PP) is a polymer used wider and wider in food packing. PP properties have improved considerably in the last decades, due to technical progress and the discovery of new metallocene catalysts for obtaining comonomers. This method presents the same disadvantage as paper.

The small dimension in combination with chemical composition of the nano-particles (PN), as well as their superficial structure provide them with unique characteristics and a high potential for applications. Nano-technology is considered as the next revolution in many fields of industry, including food processing and packing. Nano-materials used in food industry provide protection against food alteration, bio-safety (for example, there are nano-sensors used for detection of food alteration) and food nano-additives.

Titanium dioxide ($TiO_2$) is an additive already accepted in food industry (E171). The utilisation of nano-$TiO_2$ is an alternative for food preservation, due to physical and chemical stability, low cost, availability and, within certain limits, lack of toxicity. The mechanism of photocatalytical activity of $TiO_2$ consists of generation of pairs of electron-hole under the influence of ultraviolet radiation (UV) at wavelengths under 385 mm. The pairs of electron-hole react to the molecules adsorpted at the surface of the semiconductor, degrading the compounds absorbed on the surface. The preserving action of $TiO_2$ results from the degradation of organic compounds generated through the processes which take place while preserving the food.

Titanium dioxide $TiO_2$ can be modified with the use of different materials in order to extend the spectral field which excites $TiO_2$ towards the visible region, to reduce the speed of recombination of charge carriers and to improve morphological properties, such as specific surface, porosity etc. Thus, $TiO_2$ can be modified with metal particles, such as silver (Ag), gold (Au), palladium (Pd), therefore resulting materials with antimicrobial activity or it can be modified with nitrogen compounds, graphene or other oxiades, thus obtaining materials having high specific surface and encreased photocatalytical activity.

It is known the patent document no. KR101096735 (B1) which refers to a pellicular food package, with nano-particles of Titanium dioxide ($TiO_2$) and Zinc oxide (ZnO).

It is also known the patent document no. KR20130037537 (A), which refers to a antimicrobial food package that uses nano-particles of silver (Ag) and Silicium dioxide ($SiO_2$).

Furthermore, it is known the patent document no. CN103421338 (A), which refers to a kind of plastic bag having specific properties for preserving food freshness, based on silver (Ag) nano-particles.

The commune disadvantage of these three acknowledged methods is that they do not increase the validity time limit of dairy products and of fresh fruits and do not guarantee the growth of lactic bacteria in the dairy products.

The technical problem which the claimed invention wants to solve is to develop a process for obtaining an active food package that would ensure the preservation of as many types of food as possible, during a longer period of time, at the environmental temperature of 10-30$^0$ C, as well as the refrigerating temperature of 0-10$^0$ C, together with the maintaining of food properties during the preservation period.

Processes of obtaining food packages that could solve the technical problem include using paper or polypropylene as raw material, modified with nano-structured materials,

1. Mixt composite of Titanium dioxide and Silicium dioxide, modified with silver nano-particles by weight percent of 0.5-3% silver (Ag/$TiO_2$-$SiO_2$ with 0.5-3 wt% Ag)
2. Composite of Titanium dioxide modified with gold nano-particles by mole percent of 0.1-0.15 % gold (Au/$TiO_2$ with 0.10-0.15 mole% Au)
3. Composite of Titanium dioxide modified with nitrogen and silver nano-particles by weight percent of 0.5-3% silver (Ag/N-$TiO_2$ with 0.5-3 wt% Ag).

ANCA MIHALY COZMUTA ET AL: "Active Packaging System Based on Ag/TiO 2 Nanocomposite Used for Extending the Shelf Life of Bread. Chemical and Microbiological Investigations",PACKAGING TECHNOLOGY AND SCIENCE, vol. 28, no. 4, 12 September 2014, pages 271-284, discloses a process of producing a food package of polyethylene with Ag/TiO2 nano-particles.

In this way, there can be obtained 6 types of compositions for active packages. The composition for the food package obtained according to the invention is:

1) Polypropylene modified with Titanium dioxide-Silicium dioxide modified with silver nano-particles (Ag-TiO$_2$-SiO$_2$)

In order to test the preserving activity of active packages obtained from these compositions of materials, there have been used 10 types of food, which represent the main categories of food, that, in general, have a short life: milk and dairy products, meat and meat products, fresh fruits, fresh fruit juice, pasta and bakery products.

Milk has been used in fresh state, having 3.5-7 wt% fat; it was analyzed 12 days before the expire date mentioned on the package.

Drinking yoghurt contained 0.5-2.8 wt% fat and was purchased packed in white PET. It was analyzed 10 days before the expire date mentioned on the package.

Fresh cheese (bulk) contained 2-10 wt% fat, it was packed in HDPE delivery casserole and was analyzed 3 days before the expire date mentioned on the package.

Bulk meat was fresh, minced (pork:beef=0.5-5), packed for transport in a PE bag and was analyzed 2 days before the expire date mentioned on the package.

Pork frankfurters (Viena sausage), packed in PP in controlled atmosphere were analyzed 12 days before the expire date mentioned on the package.

Fresh apricots, bulk, were purchased without being mentioned the expire date.

Fresh strawberries were purchased in PP casseroles and were analyzed 6 days before the expire date mentioned on the package.

Fresh apple juice, pasteurized, packed in a bag-in-box system, was analyzed 10 days before the expire date mentioned on the package.

Fresh pave bread, 1-2 kg/piece, was analyzed 5 days before the expire date mentioned on the package.

Pasta were tested in a fresh state, home-made (noodles), prepared of white and black flour, water, eggs and salt, having validity time limit of 24-48 h.

There have been taken into consideration two basic prime sources for the package composition, paper and polypropylene and has been established the type of package corresponding to each type of food tested, according to **Table 1.**

*Table 1.*

| Types of package tested for each type of tested food | |
|---|---|
| **Food** | **Package** |
| **Milk** | Polypropylene modified with Ag/TiO$_2$-SiO$_2$ |
| | Polypropylene modified with Ag/N-TiO$_2$ |
| | Polypropylene modified with Au/TiO$_2$ |
| **Yoghurt** | Polypropylene modified with Ag/TiO$_2$-SiO$_2$ |
| | Polypropylene modified with Ag/N-TiO$_2$ |
| | Polypropylene modified with Au/TiO$_2$ |
| **Fresh cheese** | Polypropylene modified with Ag/TiO$_2$-SiO$_2$ |
| | Polypropylene modified with Ag/N-TiO$_2$ |
| | Polypropylene modified with Au/TiO$_2$ |
| **Minced meat** | Paper modified with Ag/TiO$_2$-SiO$_2$ |
| | Paper modified with Ag/N-TiO$_2$ |
| | Paper modified with Au/TiO$_2$ |
| **Frankfurters** | Paper modified with Ag/TiO$_2$-SiO$_2$ |
| | Paper modified with Ag/N-TiO$_2$ |
| | Paper modified with Au/TiO$_2$ |

(continued)

| Types of package tested for each type of tested food | |
|---|---|
| **Food** | **Package** |
| **Apricots** | Paper modified with Ag/TiO$_2$-SiO$_2$ |
| | Paper modified with Ag/N-TiO$_2$ |
| | Paper modified with Au/TiO$_2$ |
| **Strawberries** | Paper modified with Ag/TiO$_2$-SiO$_2$ |
| | Paper modified with Ag/N-TiO$_2$ |
| | Paper modified with Au/TiO$_2$ |
| **Apple juice** | Polypropylene modified with Ag/TiO$_2$-SiO$_2$ |
| | Polypropylene modified with Ag/N-TiO$_2$ |
| | Polypropylene modified with Au/TiO$_2$ |
| **Bread** | Paper modified with Ag/TiO$_2$-SiO$_2$ |
| | Paper modified with Ag/N-TiO$_2$ |
| | Paper modified with Au/TiO$_2$ |
| **Pasta** | Paper modified with Ag/TiO$_2$-SiO$_2$ |
| | Paper modified with Ag/N-TiO$_2$ |
| | Paper modified with Au/TiO$_2$ |

The types of food wrapped in the packages mentioned in table 1 were kept at the environmental temperature of 10-30°C, in a artificially illuminated room, as well as in refrigerating conditions (0-10°C), that is in a permanently illuminated fridge.

There have been conducted sanitation tests in order to establish the microbiological load of the packages before being used **(Table 2).**

*Table 2.*

| Results of the sanitation tests (number of positive tests out of 10 analized bottles) | | | |
|---|---|---|---|
| | **Coliform bacteria** | **Total number of aerobian mesophyll germs** | **Dregs and moulds** |
| **Polypropylene - Ag/-TiO$_2$-SiO$_2$** | 0 / 10 (CFU/ ml capacity) | 0 / 10 (CFU/ ml capacity) | 0 / 10 (CFU/ ml capacity) |
| **Polypropylene - Au/-TiO$_2$** | 0 / 10 (CFU/ ml capacity) | 0 / 10 (CFU/ ml capacity) | 0 / 10 (CFU/ ml capacity) |
| **Polypropylene - Ag/N-TiO$_2$** | 0 / 10 (CFU/ ml capacity) | 0 / 10 (CFU/ ml capacity) | 0 / 10 (CFU/ ml capacity) |
| **Polypropylene - reference** | 0 / 10 (CFU/ ml capacity) | 0 / 10 (CFU/ ml capacity) | 0 / 10 (CFU/ ml capacity) |
| **Cap (top)** | 0 / 10 (CFU/ cm$^2$) | 0 / 10 (CFU/ cm$^2$) | 0 / 10 (CFU/ cm$^2$) |
| **Paper - Ag/TiO$_2$-SiO$_2$** | 0 / 10 (CFU/ cm$^2$) | 0 / 10 (CFU/ cm$^2$) | 0 / 10 (CFU/ cm$^2$) |
| **Paper - Au/TiO$_2$** | 0 / 10 (CFU/ cm$^2$) | 1/10-1 CFU/ cm$^2$ 9 / 10 - 0 CFU/ cm$^2$ | 0 / 10 (CFU/ cm$^2$) |
| **Paper - Ag/N-TiO$_2$** | 0 / 10 (CFU/ cm$^2$) | 0 / 10 (CFU/ cm$^2$) | 0 / 10 (CFU/ cm$^2$) |
| **Paper - reference** | 0 / 10 (CFU/ cm$^2$) | 0 / 10 (CFU/ cm$^2$) | 0 / 10 (CFU/ cm$^2$) |

The composition for obtaining the package can be considered commercially sterile. Only in a single package out of ten, that is paper with Au/TiO$_2$, there has been found 1 UFC / cm$^2$ of aerobian mesophyll germs. The legal limit is that of 1

$UFC / cm^2$, which means that the composition for obtaining the package has commercial sterility.

The physical-chemical and microbiological tests carried out in order to determine the alteration of food were: total acidity, nitrogen slightly hydrolysable, number of total aerobian mesophyll germs (NTG), *Enterobacteriaceae*, dregs and moulds.

Furthermore, there has been made a test in order to determine if package Titanium (Ti) got into the food, that is atomic spectroscopy on a graphite furnace. There haven't been detected traces of Titanium (Ti) in the food samples, which means that there is no danger of contaminating the food with Titanium (Ti) while depositing.

In **Table 3** there are presented some of the results of the experiments carried out while depositing different types of food wrapped in the packages obtained through the process described by the claimed invention, as well as the period during which each type of food wrapped in the packages obtained from compositions modified with composite alters and the parameter that lead to the conclusion that the food is altered.

*Table 3*

| The day in which the alteration occurred in every product, according to the depositing conditions | | | | |
|---|---|---|---|---|
| | reference | $Ag/TiO_2\text{-}SiO_2$ | $Ag/N\text{-}TiO_2$ | $Au/TiO_2$ |
| **Milk - *environment*** | day 3/ acidity | day 4/ acidity | day 4/ acidity | day 4/ acidity |
| **Milk - *refrigeration*** | 36+ | 36+ | day 9/ NTG & Enterobacteriaceae | 36+ |
| **Yoghurt - *environment*** | day 10/ acidity | day 11/ acidity | day 10/ acidity | day 10/ acidity |
| **Yoghurt - *refrigeration*** | day 36/ acidity | 36+ | 36+ | 36+ |
| **Apple juice - *environment*** | day 6/ dregs & moulds | day 6/ dregs & moulds | day 6/ dregs & moulds | day 6/ dregs & moulds |
| **Apple juice - *refrigeration*** | 36+ | 36+ | 36+ | 36+ |
| **Fresh cheese - *environment*** | day 1/ acidity | day 1/ acidity | day 1/ acidity | day 1/ acidity |
| **Fresh cheese - *refrigeration*** | day 8/ acidity | day 10/ mould | day 10/ mould | day 8/ acidity |
| **Minced meat - *environment*** | day 1/ NTG | day 1/ NTG | day 1/ NTG | day 1/ NTG |
| **Minced meat - *refrigeration*** | day 2/ NTG | day 2/ NTG | day 3/ nitrogen slightly hydrolysable | day 2/ NTG |
| **Pasta - *environment*** | day 2/ NTG | day 2/ NTG | day 3/ NTG | day 3/ NTG |
| **Pasta - *refrigeration*** | day 12/ mould | day 12/ mould | day 12/ mould | day 12/ mould |
| **Apricots - *environment*** | day 12/ mould | day 12/ mould | day 14/ mould | day 12/ mould |
| **Apricots - *refrigeration*** | 35+ | 35+ | 35+ | 35+ |
| **Strawberries - *environment*** | day 5/ mould | day 5/ mould | day 5/ mould | day 5/ mould |
| **Strawberries - *refrigeration*** | day 12/ mould | day 12/ mould | day 14/ mould | day 12/ mould |
| **Frankfurters - *environment*** | day 6/ nitrogen slightly hydrolysable | day 7/ nitrogen slightly hydrolysable | day 7/ nitrogen slightly hydrolysable | day 7/ nitrogen slightly hydrolysable |

(continued)

| *The day in which the alteration occurred in every product, according to the depositing conditions* | | | | |
|---|---|---|---|---|
| | reference | Ag/TiO$_2$-SiO$_2$ | Ag/N-TiO$_2$ | Au/TiO$_2$ |
| **Frankfurters -** *refrigeration* | day 14/ NTG | day 14/ NTG | day 151 nitrogen slightly hydrolysable | day 14/ NTG |
| **Bread-** *environment* | day 7/ dregs & moulds | day 9/ dregs & moulds | day 9/ dregs & moulds | day 7/ dregs & moulds |
| **Bread -** *refrigeration* | day 14/ dregs & moulds | day 151 acidity | day 16/ acidity | day 13/ dregs & moulds |
| *Notes:* 1) The term *"day 3/acidity"* means *"altered in day 3 due to exceeding acidity limit"*<br>2) The term "36+ " means *"the experiment began 36 days ago and is still developing"*<br>3) The word *"environment"* refers to a *food kept at the environmental temperature (between 10 and 30°C), in a artificially illuminated room*<br>4) The word *"refrigeration"* refers to a *food kept in refrigerating conditions (0-10°C), in a permanently illuminated fridge* | | | | |

The validity period for the milk deposited in packages *made from compositions* of polypropylene modified with the three types of composites *made of nano-structured materials,* at the environmental temperature, is longer with one day in comparison with reference package. The validity time limit of the yoghurt deposited in the polypropylene package - Ag/TiO$_2$-SiO$_2$, at the environmental temperature, increases as compared to the yoghurt deposited in the other active packages and in the reference packages. The yoghurt deposited in refrigerating conditions can be kept for a long time in the tested packages, in food safety conditions.

The validity period of fresh cheese deposited in refrigerators wrapped in packages *made of compositions* of polypropylene modified with Ag/TiO$_2$-SiO$_2$ and Ag/N-TiO$_2$ has increased in comparison with the one deposited in the reference package and in the package modified with Au/TiO$_2$.The validity period of minced meat deposited in the refrigerator, wrapped in package <u>made of compositions</u> of paper - Ag/N-TiO$_2$ is longer than that of the one deposited in the other packages.

The validity period of pasta deposited at the environmental temperature, in packages <u>made of compositions</u> of paper - Ag/N-TiO$_2$ and Au/TiO$_2$ increases as compared to the one of the pasta deposited in the other packages.

The frankfurters deposited in the packages <u>made of compositions</u> modified with composites have the validity time limit longer than the one of the reference package.

The validity period of bread at the environmental temperature deposited in the packages *made of compositions* modified with composites has increased in comparison with the reference packages.

<u>The composite of Titanium dioxide-Silicium dioxide modified with silver nano-particles</u> Ag/TiO$_2$-SiO$_2$ with 0.5-3 wt% Ag increases the life time of dairy products with 1-2 days in comparison with the samples deposited in unmodified polypropylene package, that is the reference package and in comparison with the other two types of packages *made of modified compositions.* The composite of Titanium dioxide-Silicium dioxide modified with silver nano-particles Ag/-TiO$_2$-SiO$_2$ with 0.5-3 wt% Ag stimulates the development of lactic bacteria and controls the acidity of bread.

<u>The composite of Titanium dioxide modified with nitrogen and silver nano-particles</u> Ag/N-TiO$_2$ cu 0.5-3 wt% Ag increases the life time of fresh fruits with 1-2 days as compared to the sample deposited in the reference package and to the one deposited in the other modified packages. The composite of Titanium dioxide modified with nitrogen and silver nano-particles Ag/N-TiO$_2$ cu 0.5-3 wt% Ag increases the life time of meat and meat products with 1 day in comparison with the case in which other packages were used. The composite Ag/N-TiO$_2$ controls the acidity of bread.

<u>The composite of Titanium dioxide modified with gold nano-particles</u> Au/TiO$_2$ with 0.10-0.15 mole% Au stimulates the development of lactic bacteria in the dairy products.

The process of obtaining intelligent food packages, according to the claimed invention, has several advantages, as follows:

- increases the validity period of food products;
- ensures the preservation of food properties as long as they are kept in the *food* packages;
- stimulates the development of lactic bacteria in the dairy products kept in the *food* packages.

Further on, there are presented several examples of practical implementation of the process for obtaining food packages *made from nano-structured materials,* according to the claimed invention.

The process for obtaining food packages based on polypropylene, according to the claimed invention, consists of two stages, which are the obtaining of the composite and the obtaining of packages.

As far as the composite of Titanium dioxide modified with gold nano-particles (Au/TiO$_2$), with 0.10-0.15 mole % Au, is concerned, the process consists of the next stages: there is added to the aqueous solution of isopropanol 3-5 weight percent (wt%) the mixture of tetra-isopropoxide of Titanium Ti(O-$i$Pr)$_4$ and isopropanol (5-7 wt%), then the mixture obtained is stirred up for 1-3 h, after which, there is added tetrachloroauric acid (III) to the white slurry obtained, thus the composition obtained is stirred up for 3-6 h, the whole process culminating with the elimination of the solvent through distillation and the calcination during 20-30 h, at the temperature of 400-600°C, of the tetra-isopropoxide of Titanium. The molar ratios of the reactants is: water : tetra-isopropoxide of Titaniumium H$_2$O:Ti(O-$i$Pr)$_4$ = 3-6 and tetra-isopropoxide of Titanium : tetrachloroauric acid = 150-170 Ti(O-$i$Pr)$_4$: HAuCl$_4$ = 150-170. The composition obtained is blue-gray.

As far as the composite of Titanium dioxide-Silicium dioxide modified with silver nano-particles Ag/TiO$_2$-SiO$_2$ cu 0.5-3 wt% Ag, is concerned, the process consists of two stages:

Firstly, the gel of Titanium dioxide-Silicium dioxide (TiO$_2$-SiO$_2$) (50-80 g) is prepared through the method sol-gel in acid catalysis, tetra-isopropoxide of Titanium Ti(O-$i$Pr)$_4$ being used as a source for Titanium, and for Silicium, tetrathyl-silicate (TEOS), hydrolysis by ultrapure water, in the presence of nitric acid (catalyst), using absolute ethanol as reaction medium.

The molar ratios of the reactants are:

$$[\text{Ti(O-}i\text{-Pr)}_4]:[\text{TEOS}] = 1\text{-}3$$

$$[\text{Ti(O-}i\text{-Pr)}_4]:[\text{C}_2\text{H}_5\text{OH}] = 0.03\text{-}0.06$$

$$[\text{Ti(O-}i\text{-Pr)}_4]:[\text{H}_2\text{O}] = 0.1\text{-}0.3$$

$$[\text{Ti(O-}i\text{-Pr)}_4]:[\text{HNO}_3] = 5\text{-}8$$

The gelification takes place very rapidly, after which the jells are put for maturation for 1-3 weeks.

Then, the silver ion Ag$^+$ is reduced out of the silver nitrate (AgNO$_3$) through the immersion of the gel of Titanium dioxide-Silicium dioxide (TiO$_2$-SiO$_2$) into 200-600 ml solution of tetrahydroborate of Sodium (NaBH$_4$), at a temperature of 2-10$^0$C, after which, while stirring, there are added 10-30 ml solution of silver nitrate (AgNO$_3$) (5-10mM), continuing the stirring for another 10-30 minutes. The mixture is filtered and washed using ethanol, then it is kept in ethanol for 20-48 h, after which it is put for drying during 5-30 h, at a temperature of 80-120$^0$C, resulting a xerogel that is undergoing a thermal treatment in a furnace, at a temperature of 300-600°C.

In the case of the composite Titanium dioxide modified with nitrogen and silver nano-particles Ag/N-TiO$_2$ with 0.5-3 %wt Ag, the process for its obtaining consists of preparation of three solutions **A, B** and **C.**

Solution **A** consists of 10-30 ml absolute ethanol, to which it is added, while permanently stirring, 5-10 ml of tetra-isopropoxide of Titanium. Solution B consists of 1-7 ml of distilled water, to which it is added 0.05-0.24 ml of concentrated nitric acid (HNO$_3$). Solution C consists of 1-7 ml silver nitrate AgNO$_3$ (5-10mM), to which it is added, while continuing stirring, 0-50 $\mu$l diethanolamine, 10-30 $\mu$l distilled water and 5-15 ml absolute ethanol. The three solutions are homogenized, then the resulted gel is put in a hermetic polyethylene container, it is put for maturation for 5-14 days, after which the gel is washed with ethanol, then it is put for drying in overcritical conditions with liquid Carbon dioxide CO$_2$, and the aerogel resulted is thermally treated at a temperature of 300-600$^0$C, during 2-5 h.

In order to obtain food packages based on polypropylene, each of the three composites Au/TiO$_2$, Ag/TiO$_2$-SiO$_2$ and Ag/N-TiO$_2$ is introduced in 3-5 Kg of polypropylene granules, so that the weight percent of the composite in the package is 0.5-3%, after which the mixture is put into the tank and it is subdued to an injection through bottles of 500-1000 ml.

The process for obtaining food packages based on paper with a consistence of 0.05-0.2 g composite/sheet, there have to be followed several stages: in a first stage, the composite Au/TiO2 or Ag/TiO2-SiO2 or Ag/N-TiO2 is prepared, and afterwards, in a second stage, 5-8 l of water are introduced in a dosimeter, to which, in a third stage, it is added, on the surface, 800-1500 ml cellulosic slurry, the forth stage consists in the addition of 90-120 g of composite Au/TiO$_2$ or Ag/TiO$_2$-SiO$_2$ or Ag/N-TiO$_2$, considering that 20-70% of the composite is lost, after which, in the following stage, while stirring, it is extracted a quantity of 200-700 ml of cellulosic slurry with composite, out of each, in the following stages, a sheet is made, that is afterwards filtered and dried in a drying cabinet.

**Example 1.** In order to deposit milk in different conditions of temperature, there are used packages based on polypropylene modified nano-materials: Ag/TiO$_2$-SiO$_2$ with 0.5-3 wt% Ag, in the form of bottles of 500-1000ml, in which the composition of the nanomaterial was of 0.5-3 wt%. Test results indicated that the validity time limit of milk deposited in polypropylene packages modified with composite, at the temperature of 10-30°C, is prelonged with one day in comparison with the one of the reference package, that unmodified is propylene package; beginning with the forth day of depositing, the milk kept in the modified packages is considered altered due to the increase of acidity. The validity time limit of milk kept in refrigerating conditions (0-10°C) in the polypropylene packages, *composition of* polypropylene - Ag/TiO$_2$-SiO$_2$ with 0.5-3 wt% Ag is longer than 36 days than the one of the milk kept in the same conditions.

Example 2. In order to deposit yoghurt in different conditions of temperature, there have been used packages based on polypropylene described in Example 1. The results of the tests carried out have indicated that the yoghurt deposited at the environmental temperature of 10-30°C, in the polypropylene package Ag/TiO$_2$-SiO$_2$ with 0.5-3 wt% Ag has a one day longer validity time limit than the one deposited in the other 5 packages presented in the invention. Yoghurt deposited in refrigerating conditions can be kept for 36 days in the reference package and more than 36 days in the packages modified with composites, in coditions of food safety.

**Example 3.** In order to deposit cheese in different conditions of temperature, there have been used packages based on polypropylene described in example 1. Test results indicated that the validity time limit of fresh cheese deposited at the environmental temperature of 10-30°C, in the packages *made of compositions modified* with composites is of 1 day, the same as for cheese kept in the reference package. The validity time limit of fresh cheese deposited in refrigerating conditions (0-10°C), in the packages *from compositions* made of polypropylene modified with Ag/TiO$_2$-SiO$_2$ (with 0.5-3 wt% Ag) has increased with 2 days as compared to the cheese deposited in the reference package.

## Claims

1.  Process for obtaining a food package based on polypropylene modified with nano-structured materials, comprising a step of modifying polypropylene with a mixed composite of Titanium dioxide and Silicium dioxide modified with silver nano-particles by weight percent of 0.5-3% silver (Ag/TiO$_2$-SiO$_2$ with 0.5-3wt% Ag) and obtaining a food package with the modified polypropylene.

2.  Process for obtaining a food package, according to claim 1, **wherein,** the composite used is a mixed composite of Titanium dioxide - Silicium dioxide modified with silver nano-particles with a mass percentage of silver 0.5-3% Ag, which is prepared from a gel of Titanium dioxide-Silicium dioxide maturated for 1-3 weeks, then this gel is immersed into 200-600 ml of solution of tetrahydroborate of Sodium (NaBH$_4$), at a temperature of 2-10$^0$C, after which, while stirring, there are added 10-30 ml solution of silver nitrate AgNO$_3$ with a molar concentration of 0.005-0.01 M, continuing the stirring for another 10-30 minutes, after which the mixture is filtered and washed using ethanol, then it is kept in ethanol for 20-48 h, after which it is put for drying at a temperature of 80-120$^0$C, during 5-30 h, thus resulting xerogel which is undergoing a thermal treatment in a calcinator, at a temperature of 300-600°C.

3.  Process for obtaining a food package, according to claim 2, **wherein,** the gel of Titanium dioxide-Silicium dioxide is prepared through the sol-gel method in acid catalysis, using as source for Titan the Titanium tetra-isopropoxide and as source for Silicium the Silicium tetraethyl-silicate, both hydrolysed with ultrapure water, in the presence of nitric acid, using absolute Ethanol as reaction medium, the molar ratios of the reactants being: Titanium tetra-isopropoxide : tetraethyl-silicate = 1-3, Titanium tetra-isopropoxide : absolute ethanol = 0.03-0.06, Titanium tetra-isopropoxide : ultrapure water = 0.1-0.3 and Titanium tetra-isopropoxide : nitric acid = 5-8.

4.  Process for obtaining a food package according to claim 1, **wherein,** the composite is added so that the weight percent of the composite in the package to be 0.5-3%.

## Patentansprüche

1.  Verfahren zur Herstellung einer Lebensmittelverpackung auf der Basis von Polypropylen, das mit nanostrukturellen Materialien modifiziert ist, umfassend einen Schritt des Modifizierens des Polypropylens mit einem gemischten Verbundmaterial aus Titandioxid und Siliziumdioxid, das mit Silbernanopartikeln in einem Massenprozentsatz von 0,5-3% Silber (Ag/TiO$_2$-SiO$_2$ mit 0.5-3wt% Ag) modifiziert ist, und des Erhaltens einer Lebensmittelverpackung mit modifiziertem Polypropylen.

2.  Verfahren zur Herstellung einer Lebensmittelverpackung nach Anspruch 1, **dadurch gekennzeichnet, dass** das verwendete Komposit ein Titandioxid-Siliziumdioxid-Komposit **[Gemisch]** ist, das mit Silber-Nanopartikeln mit einem Massengehalt an Silber von 0. 5-3%, hergestellt aus einem Gel aus Titandioxid-Siliziumdioxid, das 1-3 Wochen lang gereift ist, wonach dieses Gel in 200-600 ml Natriumtetrahydroborat (NaBH$_4$)-Lösung bei einer Temperatur von 2-10°C getaucht wird, wonach während des Mischens 10-30 ml AgNO$_3$-Silbernitratlösung mit einer molaren

Konzentration von 0,005-0,01 M zugegeben werden, wobei das Mischen für weitere 10-30 Minuten fortgesetzt wird, wonach das Gemisch gefiltert und mit Ethanol gewaschen wird, dann für 20-48 Stunden in Ethanol aufbewahrt wird, wonach es bei einer Temperatur von 80-120°C für 5-30 Stunden getrocknet wird, wobei das resultierende Gel einer Wärmebehandlung in einem Kalzinierungsofen bei einer Temperatur von 300-600°C unterzogen wird,

3. Verfahren zur Herstellung einer Lebensmittelverpackung nach Anspruch 2, **dadurch gekennzeichnet, dass** das Titandioxid-Siliciumdioxid-Gel durch das Sol-Gel-Verfahren in saurer Katalyse hergestellt wird, wobei Titantetraisopropoxid als Titanquelle und Siliciumtetraethylsilicat als Siliciumquelle verwendet werden, die beide mit gereinigtem Wasser in Gegenwart von Salpetersäure unter Verwendung von Ethanol als Reaktionsmedium [hydrolysiert] werden, wobei die molaren Verhältnisse der Reaktanten sind: Titantetraisopropoxid: Tetraethylsilikat = 1-3, Titantetraisopropoxid: absolutes Ethanol = 0. 03-0,06, Titantetra-isopropoxid: gereinigtes Wasser = 0,1-0,3 und Titantetraisopropoxid: Salpetersäure = 5-8.

4. Verfahren zur Herstellung einer [Lebensmittelverpackung] nach Anspruch 1, **dadurch gekennzeichnet, dass** der Verbundstoff so zugesetzt wird, dass der Massenanteil des Verbundstoffs in der Verpackung 0,5-3% beträgt. [ ]

## Revendications

1. Procédé d'obtention d'un emballage alimentaire à base de polypropylène modifié avec des matériaux nano structurels, comprenant une étape de modification du polypropylène avec un composite mixte de dioxyde de titane et de dioxyde de silicium modifié avec des nanoparticules d'argent dans un pourcentage massique de 0,5 à 3 % d'argent (Ag/TiO$_2$-SiO$_2$ à 0,5 - 3wt % Ag) obtenant un emballage alimentaire à polypropylène modifié.

2. Procédé d'obtention d'un emballage alimentaire, selon la revendication 1, **caractérisé en ce que** le composite utilisé est un composite [mixte]
de dioxyde de titane - dioxyde de silicium modifié avec des nanoparticules d'argent d'une teneur en poids d'argent de 0,5 -3%, préparé d'un gel composé de dioxyde de titane - dioxyde de silicium, affiné pendant 1 à 3 semaines, après quoi ce gel est immergé dans 200-600 ml de solution de tétrahydruroborate de sodium (NaBH$_4$) à une température de 2-10°C, puis pendant le mélange, on ajoute 10-30ml. solution de nitrate d'argent AgNO$_3$ à une concentration molaire de 0,005-0,01 M, en continuant à mélanger pendant 10 à 30 minutes supplémentaires, après quoi le mélange est filtré et lavé à l'éthanol, puis il est maintenu dans de l'éthanol pendant 20 à 48 heures, après quoi il est mis à sécher à une température de 80- 120 °C pendant 5 -30 heures, le gel résultant étant soumis à un traitement thermique dans un four de calcination à une température de 300- 600 °C.

3. Procédé d'obtention d'un emballage alimentaire, selon la revendication 2, **caractérisé en ce que** le gel de dioxyde de titane - dioxyde de silicium est préparé par la méthode sol-gel en catalyse acide, en utilisant du tétraisopropoxyde de titane comme source de titane et du tétraéthylsilicate de silicium comme source de silicium, les deux [hydrolysés] A l'eau purifiée, en présence d'acide nitrique, en utilisant de l'éthanol comme milieu réactionnel, les rapports molaires des réactifs étant : tétraisopropoxyde: tétraéthyl-silicate = 1-3, tétraisopropoxyde de titane: éthanol absolu = 0,03-0,06, tétra-isopropoxyde de titane : eau purifiée = 0,1-0,3 et tétraisopropoxyde de titane: acide nitrique = 5-8.

4. Procédé d'obtention d'un [emballage alimentaire], selon la revendication 1, **caractérisé en ce que** le composite est ajouté de telle manière que le pourcentage massique du composite dans l'emballage soit de 0,5 - 3 %. [ ]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101096735 B1
- KR 20130037537 A

- CN 103421338 A

**Non-patent literature cited in the description**

- **ANCA MIHALY COZMUTA et al.** Active Packaging System Based on Ag/TiO 2 Nanocomposite Used for Extending the Shelf Life of Bread. Chemical and Microbiological Investigations. *PACKAGING TECHNOLOGY AND SCIENCE*, 12 September 2014, vol. 28 (4), 271-284